(19) Europäisches Patentamt
European Patent Office
Office européen des brevets

(11) EP 1 626 287 A1

(12) # EUROPEAN PATENT APPLICATION
published in accordance with Art. 158(3) EPC

(43) Date of publication:
**15.02.2006 Bulletin 2006/07**

(21) Application number: **03730586.9**

(22) Date of filing: **22.05.2003**

(51) Int Cl.:
***G01S 3/46*** (1968.09) ***G01S 3/74*** (1968.09)

(86) International application number:
**PCT/JP2003/006411**

(87) International publication number:
**WO 2004/104620 (02.12.2004 Gazette 2004/49)**

(84) Designated Contracting States:
**DE FR GB**

(71) Applicant: **FUJITSU LIMITED**
**Kawasaki-shi,**
**Kanagawa 211-8588 (JP)**

(72) Inventor: **XIN, Jingmin,**
**c/o FUJITSU LIMITED**
**Kawasaki-shi,**
**Kanagawa 211-8588 (JP)**

(74) Representative: **Sunderland, James Harry**
**Haseltine Lake & Co.,**
**Imperial House,**
**15-19 Kingsway**
**London WC2B 6UD (GB)**

(54) **TECHNIQUE FOR ESTIMATING SIGNAL ARRIVAL DIRECTION NOT BY UTILIZING EIGENVALUE DECOMPOSITION AND RECEPTION BEAM SHAPER**

(57) An incoming radio wave is received by array antenna elements which constitute an array antenna, and the correlation between received data of some array antenna elements is calculated to define a correlation matrix which does not undergo additional noise present in each array antenna element. Next, a noise subspace is defined from the correlation matrix defined by a simple linear operation on the basis of division of an array response matrix to estimate a signal that is incident on the array antenna. Since it is unnecessary to calculate the correlation between the data received by all the array antenna elements, and to perform eigenvalue decomposition, the computation amount is reduced and the noise resistance is improved.

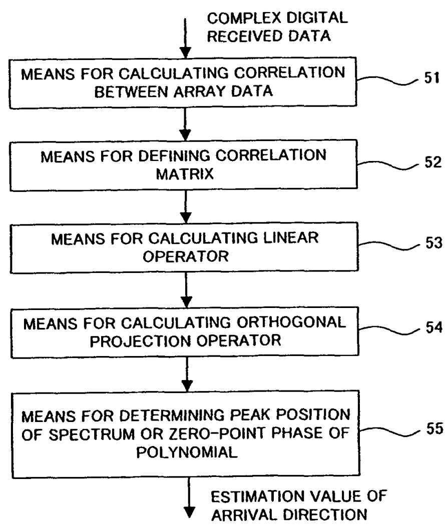


F I G. 8

EP 1 626 287 A1

## Description

### Technical Field

The present invention relates to a radio wave arrival direction estimating device for a base station which estimates a radio waves arrival direction with high accuracy by using an array antenna, and to a variable directivity receiving/transmitting device for a base station which varies the directivity of beam of an antenna based on the estimation of the arrival direction by the radio wave arrival direction estimating device. The present invention is of a technique by which an arrival direction of each of a plurality of incident signals (signals which are not uncorrelated to one another, or the multipath waves which are perfectly correlated) are estimated by means which is effective in calculation, and is especially a technique for estimating the arrival direction of each of the incident waves with similar incident directions with a high accuracy even when the length of received data is not sufficient and when the SNR is low.

### Background Art

In recent years, the study and development of adaptive array antenna for mobile communications has gathered interest. In the adaptive array antenna, a plurality of antenna elements is arrayed in a shape and in different spatial positions. A technique for estimating an arrival direction of each of the radio waves incident at an antenna (referred to also as a signal, from the view point of signal processing) is thought to be an important elemental technique for an adaptive array antenna. As for a technique for estimating the arrival direction of each of the signals, a subspace-based method which utilizes the orthogonality between a signal subspace and a noise subspace is well known from the view point of the estimation accuracy and the computation amount. A conventional subspace-based method requires processes such as Eigenvalue decomposition (EVD) of an array covariance matrix, singular value decomposition (SVD) of an array data matrix or the like in order to obtain a signal subspace (or a noise subspace). However, for a real installed array antenna, especially in the case where there are many array elements, the calculation process for the eigenvalue decomposition (or the singular value decomposition) becomes complex so that much time is required for the calculation.

Conventionally, as a method for estimating an arrival direction of each of the uncorrelated incident waves by using an array antenna, the subspace-base method utilizing the orthogonality between a signal subspace and a noise subspace is well known from the view point of the complexity of calculation, the accuracy of estimation and the like. As a representative example thereof, there is MUSIC (Multiple signal classification) (for details of this technique, refer to "Multiple emitter location and signal parameter estimation," by R.O.Schmidt, IEEE Trans. Antennas and Propagation, vol. 34, no. 3, pp. 276-280 (1986)). Also, as a measure for a technique for estimating an arrival direction of each of perfectly correlated multipath waves, the subspace-based method with spatial smoothing is well known. As a representative example thereof, there is spatial smoothing based MUSIC (for the details of this technique, refer to "On spatial smoothing for direction-of-arrival estimation of coherent signals," by T.J. Shan, M. Wax and T. Kailath, IEEE Trans. Acoust., Speech, Signal Processing, vol. 33, no. 4, pp. 806-811(1985), and also "Forward/backward spatial smoothing techniques for coherent signals identification, by S.U. Pillai andB.H. Kwon, IEEE Trans. Acoust., Speech, Signal Processing, vol. 37, no. 1, pp. 8-15 (1989)).

In the subspace-based method for estimating an arrival direction of each of uncorrelated signals, an array covariance matrix from signals incident on an array antenna is obtained so that a signal subspace and a noise subspace are obtained by the eigenvalue decomposition of the array covariance matrix. Then, the arrival direction of each of the signals is estimated by utilizing the orthogonality between the signal subspace and the noise subspace. However, for the estimation of an arrival direction of each of the correlated signals (including the perfectly correlated multipath waves), a uniform linear array (ULA) is divided into subarrays in order to suppress the correlation of incident signals and the dimension of the signal subspace of the spatially averaged covariance matrix is recovered into the number of the multipath waves by conducting an averaging operation on the covariance matrix of each subarray. Accordingly, the estimation of the arrival direction of each of the correlated signals is realized by utilizing the orthogonality between the signal subspace and the noise subspace similarly to the conventional subspace-based method.

In order to explain a demerit of the subspace-based method for a conventional method for estimation of a signal arrival direction, spatial smoothing based MUSIC for estimating an arrival directions of each of the multipath waves will be briefly explained as is discussed in an exemplary document "On spatial smoothing for direction-of-arrival estimation of coherent signals," by T. J. Shan, M. Wax and T. Kailath, IEEE Trans. Acoust., Speech, Signal Processing, vol. 33, no. 4, pp. 806-811 (1985).

Here, it is assumed that p multipath wave narrow band signals $\{s_k(n)\}$ are incident on a uniform linear array including M array elements, at an angle of $\{\theta_k\}$ (where k=1 to p). The array received signal for each element can be express as below,

$$\mathbf{y}(n)=[y_1(n),y_2(n),\cdots,y_M(n)]^T=\mathbf{A}\mathbf{s}(n)+\mathbf{w}(n) \text{ [Formula 1]}$$

where $\mathbf{A}=[\mathbf{a}(\theta_1),\mathbf{a}(\theta_2),\cdots,\mathbf{a}(\theta_p)]$, $\mathbf{a}(\theta_k)=[1,e^{j\omega_0\tau(\theta_k)},\cdots,e^{j\omega_0(M-1)\tau(\theta_k)}]^T$, $\mathbf{s}(n)=[s_1(n),s_2(n),\cdots,s_p(n)]^T$, $\mathbf{w}(n)=[w_1(n),w_2(n),\cdots,w_M(n)]^T$, $\omega_0=2\pi f_0$, $\tau(\theta)_k)=(d/c)\sin\theta_k$. And $f_0$ is a frequency of a carrier wave, c is a propagation speed, and d is element spacing (a half-wavelength). Also, $(\bullet)^T$ means a transpose, $a(\theta_k)$ and A are respectively a response vector and a response matrix of an array. Also, $w_i(n)$ is white Gaussian noise which is independent among elements and has the average value of zero and whose electric power is $\sigma^2$. Here, the array covariance matrix is expressed as below,

$$\mathbf{R}=E\{\mathbf{y}(n)\mathbf{y}^H(n)\}=\mathbf{A}\mathbf{R}_s\mathbf{A}^H+\sigma^2\mathbf{I}_M \text{ [Formula 2]}$$

where $E\{\bullet\}$ and $(\bullet)^H$ respectively express an expectation value operation and a complex conjugate transpose, $R_s=E\{s(n)\,s^H(n)\}$ is the covariance matrix of an incident multipath wave, $I_M$ is an M×M unit matrix. Further, when the correlation $r_{ik}$ of the observation data $y_i(n)$ and $y_k(n)$ is defined by $r_{ik}=E\{y_l(n)\,y_k^*(n)\}$, the above array covariance matrix R can be clearly expressed by a formula below,

$$\mathbf{R}=\begin{bmatrix} r_{11} & r_{12} & \cdots & r_{1M} \\ r_{21} & r_{22} & \cdots & r_{2M} \\ \vdots & \vdots & \ddots & \vdots \\ r_{M1} & r_{M2} & \cdots & r_{MM} \end{bmatrix} \text{ [Formula 3]}$$

where $r_{ik}=r^*_{ik}$, and $(\bullet)^*$ expresses the complex conjugate.

Fig. 1 explains the dividing of the uniform linear array into subarrays.

In the spatial smoothing based MUSIC, in order to estimate the arrival directions $\{\theta_k\}$ of perfectly correlated multipath waves, the entire uniform linear array is divided into L overlapped subarrays including m elements (where $1\le m\le M$) as shown in Fig. 1. In the above operation, m and L are respectively called the size of the subarray and the number of the subarrays, and L=M-m+1 is satisfied. Based on the formula 1, a reception vector $x_1(n)$ of a first subarray can be expressed by formula 4 as below,

$$\mathbf{y}_l(n)=[y_l(n),y_{l+1}(n),\cdots,y_{l+m-1}(n)]^T=\mathbf{A}_m\mathbf{D}^{l-1}\mathbf{s}(n)+\mathbf{w}_l(n) \text{ [Formula 4]}$$

where $\mathbf{A}_m=[\mathbf{a}_m(\theta_1),\ \mathbf{a}_m(\theta_2),\ ......\ \mathbf{a}_m(\theta_p)]$ $\mathbf{a}_m(\theta_k)=[1,e^{j\omega_0\tau(\theta_k)},\cdots,e^{j\omega_0(m-1)\tau(\theta_k)}]^T$, $\mathbf{w}_1(n)=[w_1(n),\ w_{1+1}(n),......,\ w_{1-m+1}(n)]^T$, $\mathbf{D}$ is a diagonal matrix with the elements $e^{j\omega_0\tau(\theta_1)}$, $e^{j\omega_0\tau(\theta_2)}$, ......, $e^{j\omega_0(m-1)\tau(\theta_p)}$, and l=1, 2, ......, L. Also, $\mathbf{a}_m(\theta_k)$ and $\mathbf{A}_m$ are respectively a response vector and a response matrix of a subarray. Accordingly, the covariance matrix of the first subarray can be expressed by formula 5 as below.

$$\mathbf{R}_l=E\{\mathbf{y}_l(n)\mathbf{y}_l^H(n)\}=\mathbf{A}_m\mathbf{D}^{l-1}\mathbf{R}_s(\mathbf{D}^{l-1})\mathbf{A}_m^H+\sigma^2\mathbf{I}_m \text{ [Formula 5]}$$

Further, by spatially averaging the covariance matrixes $\{R_l\}$ of L subarrays, the covariance matrix as expressed by formula 6 as below is obtained.

$$\overline{\mathbf{R}}=\frac{1}{L}\sum_{l=1}^{L}\mathbf{R}_l \text{ [Formula 6]}$$

The eigenvalue decomposition of the above spatially averaged covariance matrix $\overline{\mathbf{R}}$ can be expressed by formula 7 as below,

$$\overline{\mathbf{R}} = \sum_{i=1}^{m} \lambda_i \mathbf{e}_i \mathbf{e}_i^H = \mathbf{E} \Lambda \mathbf{E}^H \text{ [Formula 7]}$$

where $e_i$ and $\lambda_i$ are respectively an eigenvector and an eigenvalue of the matrix $\overline{\mathbf{R}}$, , E is a matrix with $\{e_i\}$ as a column, A is a diagonal matrix with the element $\{\lambda_i\}$. Also, the space spanned by the signal vector $\{e_1, e_2, ......, e_p\}$ is called the signal subspace, and the space spanned by the noise vector $\{e_{p+1}, e_{p+2}, ......, e_m\}$ is called the noise subspace. Further, the signal subspace can be expressed by using the response vector of the array. A method for estimating an arrival direction based on the orthogonality between the signal subspace and the noise subspace is called a subspace-based method.

By the eigenvalue analysis of the covariance matrix $\overline{\mathbf{R}}$ as expressed by the formula 7, the orthogonality is established as expressed by a formula 8 as below, in the response vector $a_m(\theta_k)$ of the subarray existing between the noise vector $\{e_p, e_{p+1}, ......, e_m\}$ and the signal partial space,

$$\mathbf{e}_i^H \mathbf{a}_m(\theta_k) = 0 \text{ [Formula 8]}$$

where i=p+1, ......, m. Based on the above orthogonality, the spectrum $\overline{P}_{ssmusic}(\theta)$ as below can be calculated,

$$\overline{P}_{ssmusic}(\theta) = \frac{1}{\sum_{i=p+1}^{m} \left| \mathbf{e}_i^H \mathbf{a}_m(\theta) \right|^2} \text{ [Formula 9]}$$

where $\mathbf{a}_m(\theta)=[\mathbf{1}, e^{j\omega_0\tau(\theta)}, \cdots, e^{j\omega_0(m-1)\tau(\theta)}]^T$. In the spatial smoothing based MUSIC, the arrival direction of each of the incident multipath waves is estimated based on the position of the p maxima of the spectrum given by the formula 7.

As obvious from the formula 7, the subspace-based method for estimating the arrival direction, such as the (spatial smoothing based) MUSIC requires the eigenvalue decomposition of the array covariance matrix in order to obtain the signal subspace or the noise subspace. However, for a real installed array antenna, especially in the case where there are many array elements, or for the estimation of varying arrival directions, by real time processing, the calculation process for the eigenvalue decomposition (or the singular value decomposition) becomes complex so that much time is required for the calculation. Accordingly, the performance of the conventional subspace-based method for estimating the arrival direction based on the eigenvalue decomposition in the actual application is restricted by the processing time for the eigenvalue decomposition process because of the load of the calculation. Further, if the estimation of the arrival direction of each of the signals incident on the array is not realized quickly and accurately, the received/ transmitted beam of the base station cannot be shaped accurately, and also, the performance of the receiving and transmitting system of the base station is impaired.

## Disclosure of Invention

It is an object of the present invention to provide a technique in which an arrival direction of each of the signals incident at angles which are spatially close to one other (signals which are not uncorrelated to one another, or the multipath waves which are perfectly correlated) is accurately estimated with a reduced computation amount without utilizing the eigenvalue decomposition, even when the length of data received by the array antenna is not sufficient or when the signal-to-noise ratio is low.

A method for estimating signal arrival direction according to the present invention comprises a step of obtaining correlations among the data of some of the elements based on received signals from a plurality of array antenna elements which are linearly arrayed in different spatial positions with uniform element spacing, and defining one correlation matrix from the correlations, a step of estimating a noise subspace from the correlation matrix by a linear operation, and an estimation step of calculating a peak position of the spatial spectrum obtained from the noise subspace or a zero-point of a polynomial which is equivalent to the peak position, and calculating a signal arrival direction.

According to the present invention, the correlation matrix utilizes only the correlation among some antenna elements, so that the large amount of data as in the case of handling the correlation among all of the antenna elements does not have to be handled. Further, the eigenvalue decomposition is not performed so that the computational amount is reduced. Therefore the present invention can provide a feasible method for applying the estimation of the arrival direction of each signal varying in real time to a base station.

## Brief Description of Drawings

Fig. 1 explains dividing of a uniform linear array into subarrays;
Fig. 2 to Fig. 5 respectively explain aspects of embodiments of the present invention;
Fig. 6 shows an arrangement of a transmitting source and a receiving antenna 20 in a base station;
Fig. 7 is a block diagram for showing a multipath wave arrival direction estimating system realized by applying embodiments of the present invention to the receiving antenna 20 in the base station;
Fig. 8 explains a process to be executed by an arrival direction estimating unit 50;
Fig. 9 shows RMSE (root mean-squared-errors) of estimation values $\hat{\theta}_1$ and $\hat{\theta}_2$ of the arrival directions;
Fig. 10 shows RMSE of each of the estimation values $\hat{\theta}_1$ and $\hat{\theta}_2$ obtained by one thousand times calculation; and
Fig. 11 explains a reception beam shaper for a base station which shapes a beam whose peak is directed to a desired arrival direction, realized by utilizing the arrival direction estimating device which employs a technique for estimating the arrival direction of each signal, in an embodiment of the present invention.

## Best Mode for Carrying Out the Invention

The present invention provides a technique in which an arrival direction of each of the signals incident at angles which are spatially close to one other is accurately estimated with a reduced computation amount without utilizing eigenvalue decomposition, even when the amount of data received by the array antenna is not sufficient or when the signal-to-noise ratio (SNR) is low, in a white noise environment without time and spatial correlation or in a noise environment with spatial correlation.

Fig. 2 to Fig. 5 respectively explain aspects of embodiments of the present invention.

In order to realize the above object, in an aspect of embodiments of the present invention, as shown in Fig. 2, correlations $\{r_{1M}, r_{2M}, ......, r_{M-1,M}\}$ between $M^{th}$ element data and $1^{st}$, $2^{nd}$,......, $M-1^{th}$ elements data are calculated from complex digital received data from antenna elements of a uniform linear array, one correlation matrix $\Phi_f$ is defined from the above correlations, and a noise subspace is calculated from the above correlation matrix by a liner operation. Thereafter, an arrival direction of each of the multipath waves is calculated based on a peak position of the spatial spectrum obtained from the above noise subspace or the zero-point of a polynomial obtained by an operation.

Also, in another aspect of the embodiments of the present invention, as shown in Fig. 2, correlations $\{r_{21}, r_{31}, ......, r_{M1}\}$ between first element data and $2^{nd}$, $3^{rd}$,......, $M^{th}$ elements data are calculated from complex digital received data from antenna elements of the uniform linear array, and one correlation matrix $\bar{\Phi}_f$ is defined from the above correlations. Thereafter, an arrival direction of each of the multipath waves is calculated based on a peak position of the spatial spectrum obtained from the above noise subspace or the zero-point of polynomial obtained by an operation.

Also, in yet another aspect of the embodiments of the present invention, as shown in Fig. 3, correlations $\{r_{12}, r_{13}, ......, r_{1M}\}$ between first element data and $2^{nd}$, $3^{rd}$,......, $M^{th}$ elements data are calculated from complex digital received data from antenna elements of the uniform linear array, and one correlation matrix $\Phi_b$ is defined from the above correlations. Thereafter, an arrival direction of each of the multipath waves is calculated based on a peak position of the spatial spectrum obtained from the above noise subspace or the zero-point of a polynomial obtained by an operation.

Also, in still another aspect of the embodiments of the present invention, as shown in Fig. 3, correlations $\{r_{M1}, r_{M2}, ......, r_{M,M-1}\}$ between $M^{th}$ element data and $2^{nd}$, $3^{rd}$,...., $M^{th}$ elements data are calculated from complex digital received data from antenna elements of a uniform linear array, one correlation matrix $\bar{\Phi}_f$ is defined from the above correlations, and a noise subspace is calculated from the above correlation matrix by a linear operation. Thereafter, an arrival direction of each of the multipath waves is calculated based on a peak position of the spatial spectrum obtained from the above noise subspace or the zero-point of a polynomial obtained by an operation.

Also, in still another aspect of the embodiments of the present invention, as shown in Fig. 2 and Fig. 3, correlations between first element data and $2^{nd}$, $3^{rd}$, ......, $M^{th}$ elements data, and correlations between $M^{th}$ element data and $1^{st}$, $2^{nd}$, ......, $M\text{-}1^{th}$ elements data are calculated from complex digital received data from antenna elements of a uniform linear array, one correlation matrix $\Phi$ (e.g. $\Phi = [\Phi_f, \bar{\Phi}_f, \Phi_b, \bar{\Phi}_b]$ is defined from the obtained correlation matrixes $\Phi_f$, $\bar{\Phi}_f$, $\Phi_b$, $\bar{\Phi}_b$, and a noise subspace is calculated from the above correlation matrix by a liner operation. Thereafter, an arrival direction of each of the multipath waves is calculated based on a peak position of the spatial spectrum obtained from the above noise subspace or the zero-point of a polynomial obtained by an operation.

Also, in still another aspect of the embodiments of the present invention, as shown in Fig. 2 and Fig. 3, correlations between first element data and $2^{nd}$, $3^{rd}$,......, $M^{th}$ elements data, and correlations between $M^{th}$ element data and $1^{st}$, $2^{nd}$, ......, $M\text{-}1^{th}$ elements data are calculated from complex digital received data from antenna elements of a uniform linear array, one correlation matrix $\Phi$ (e.g. $\Phi = [\Phi_f, \bar{\Phi}_f, \Phi_b]$ is defined from three arbitrary matrixes in the obtained correlation matrixes $\Phi_f$, $\bar{\Phi}_f$, $\Phi_b$, $\bar{\Phi}_b$, and a noise subspace is calculated from the above correlation matrix by a linear operation. Thereafter, an arrival direction of each of the multipath waves is calculated based on a peak position of the spatial spectrum obtained from the above noise subspace or the zero-point of a polynomial obtained by an operation.

Also, in still another aspect of the embodiments of the present invention, as shown in Fig. 2 and Fig. 3, correlations between first element data and $2^{nd}$, $3^{rd}$, ......, $M^{th}$ elements data, and correlations between $M^{th}$ element data and $1^{st}$, $2^{nd}$, ......, $M\text{-}1^{th}$ elements data are calculated from complex digital received data from antenna elements of a uniform linear array, one correlation matrix $\Phi$ (e.g. $\Phi = [\Phi_f, \bar{\Phi}_f]$ is defined from two arbitrary matrixes in the obtained correlation matrixes $\Phi_f$, $\bar{\Phi}_f$, $\Phi_b$, $\bar{\Phi}_b$, and a noise subspace is calculated from the above correlation matrix by a linear operation. Thereafter, the arrival direction of each of the multipath waves is calculated based on a peak position of the spatial spectrum obtained from the above noise subspace or the zero-point of a polynomial obtained by an operation.

Further, by using a technique for estimating an arrival direction of signal in an aspect of the embodiments of the present invention, an arrival direction of each of uncorrelated signals in a white noise environment without time and spatial correlation is calculated.

Further, by using a technique for estimating an arrival direction of a signal in an aspect of the embodiments of the present invention, an arrival direction of each of the partially correlated signals in a white noise environment without time and spatial correlation is calculated.

Also, in still another aspect of the embodiments of the present invention, as shown in Fig. 4 and Fig. 5, correlations between first element data and $\bar{q}+2^{th}$, $\bar{q}+3^{th}$, ......, $M^{th}$ elements data, and correlations between $M^{th}$ element data and $1^{st}$, $2^{nd}$, ......, $M-1-\bar{q}^{th}$ elements data are calculated from complex digital received data from antenna elements of a uniform linear array, one correlation matrix $\Phi$ (e.g. $\Phi = \Phi_f$) is defined from one arbitrary matrix in the correlation matrixes $\Phi_f$, $\bar{\Phi}_f$, $\Phi_b$, $\bar{\Phi}_b$ obtained from the correlations, and a noise subspace is calculated from the above correlation matrix by a linear operation. Thereafter, the arrival direction of each of uncorrelated or partially correlatedmultipath signals in a spatially correlated noise environment is calculated based on a peak position of the spatial spectrum obtained from the above noise subspace or the zero-point of a polynomial obtained by an operation.

Also, in still another aspect of the embodiments of the present invention, as shown in Fig. 4 and Fig. 5, correlations between first element data and $\bar{q}+2^{th}$, $\bar{q}+3^{th}$, ......, $M^{th}$ elements data, and correlations between $M^{th}$ element data and $1^{st}$, $2^{nd}$, ......, $M-1-\bar{q}^{th}$ elements data are calculated from complex digital received data from antenna elements of a uniform linear array, one correlation matrix $\Phi$ (e.g. $\bar{\Phi}_f$) is defined from two arbitrary matrixes in the correlation matrixes $\Phi_f$, $\bar{\Phi}_f$, $\Phi_b$, $\bar{\Phi}_b$ obtained from the correlations, and a noise subspace is calculated from the above correlation matrix by a linear operation. Thereafter, an arrival direction of each of uncorrelated or partially correlatedmultipath signals in a spatially correlated noise environment is calculated based on a peak position of the spatial spectrum obtained from the above noise subspace or the zero-point of a polynomial obtained by an operation.

Also, in still another aspect of the embodiments of the present invention, as shown in Fig. 4 and Fig. 5, correlations between first element data and $\bar{q}+2^{th}$, $\bar{q}+3^{th}$,......, $M^{th}$ elements data, and correlations between $M^{th}$ element data and $1^{st}$, $2^{nd}$, ......, $M-1-\bar{q}^{th}$ elements data are calculated from complex digital received data from antenna elements of a uniform linear array, one correlation matrix $\Phi$ (e.g. $\Phi=[\Phi_f, \bar{\Phi}_f, \Phi_b]$ ) is defined from three arbitrary matrixes in the correlationmatrixes $\Phi_f$, $\bar{\Phi}_f$, $\Phi_b$, $\bar{\Phi}_b$ obtained from the correlations, and a noise subspace is calculated from the above correlation matrix by a linear operation. Thereafter, an arrival direction of each of uncorrelated or partially correlated multipath signals in a spatially correlated noise environment is calculated based on a peak position of the spatial spectrum obtained from the above noise subspace or the zero-point of a polynomial obtained by an operation.

Also, in still another aspect of the embodiments of the present invention, as shown in Fig. 4 and Fig. 5, correlations between first element data and $\bar{q}+2^{th}$, $\bar{q}+3^{th}$,......, $M^{th}$ elements data, and correlations between $M^{th}$ element data and $1^{st}$, $2^{nd}$, ......, $M-1-\bar{q}^{th}$ elements data are calculated from complex digital received data from antenna elements of a uniform linear array, one correlation matrix $\Phi$ (e.g. $\Phi=[\Phi_f, \bar{\Phi}_f, \Phi_b, \bar{\Phi}_b]$) is defined from matrixes in the correlation matrixes $\Phi_f$, $\bar{\Phi}_f$, $\Phi_b$, $\bar{\Phi}_b$ obtained from the correlations, and a noise subspace is calculated from the above correlation matrix by a linear operation. Thereafter, an arrival direction of each of uncorrelated or partially correlatedmultipath signals in a spatially correlated noise environment is calculated based on a peak position of the spatial spectrum obtained from the above noise subspace or the zero-point of a polynomial obtained by an operation.

Also, the technique for estimating an arrival direction of a signal in an aspect of embodiments of the present invention is applied to an arrival direction estimating device of a base station.

Also, the technique for estimating an arrival direction of a signal in an aspect of embodiments of the present invention is applied to a base station, and a device for shaping a transmitted beam which generates a beam whose peak is directed at an obtained arrival direction of a signal is provided in the base station.

The present invention relates to a radio wave arrival direction estimating device for a base station which accurately estimates a radio wave arrival direction by using an array antenna with, a variable directivity receiving/ transmitting device for a base station which varies the directivity of a beam of an antenna based on the estimation of the arrival direction by the radio wave arrival direction estimating device.

Hereinafter, by referring to the drawings, the wave arrival direction estimating device for a base station will be explained as embodiments of the present invention. In the drawings, substantially like members or members having like functions are denoted by like numerals/characters. Also, for simplicity, the explanation is given for one of the plurality of the previously described embodiments.

Fig. 6 shows an arrangement of a transmitting source and a receiving antenna 20 in a base station. Fig. 7 is a block diagram for showing a multipath wave arrival direction estimating system realized by applying the embodiment of the present invention to the receiving antenna 20 in the base station.

At the receiving antenna 20 of the base station, the multipath wave arrival direction estimating system including an arrival direction estimating unit 50 as shown in Fig. 7 is arranged. Here, a signal which is directly incident on the receiving antenna 20 in the base station from the transmitting source 10 is a direct wave 11. Also, signals which are incident on the receiving antenna 20 of the base station after being reflected by buildings and the like are reflected waves 12. In Fig. 6, as an example, two reflected waves are shown, however, hereinafter, the total number of the direct wave and the reflected waves is p. Also, it is assumed that p is known. Further, the relationship between the direct wave and the reflected wave is expressed by the formula below,

$$s_k(n)=\beta_k s_1(n)$$

where $\beta_k$ is a multipath coefficient expressing a complex attenuation of the reflected wave $s_k(n)$ regarding the direct wave $S_1(n)$, and $\beta_k \neq 0$ and $\beta_1=1$.

The arrival direction estimating system comprises an array antenna 30, a base band and digital processing unit 40, and the arrival direction estimating unit 50. Also, the array antenna 30 comprises M antenna elements 31 (where M>2p).

Fig. 8 explains a process to be executed by the arrival direction estimating unit 50.

The arrival direction estimating unit 50 comprises means for calculating correlation between array data 51, means for defining a correlation matrix 52, means for calculating a linear operator 53, means for calculating an orthogonal projection operator 54 and means for determining the peak position of spectrum or zero-point phase of a polynomial 55.

Hereinafter, the technique for estimating the multipath wave arrival direction in the arrival direction estimating unit 50 will be explained by referring to Fig. 8. Initially, the means for calculating correlation between array data 51 prepares a reception vector y(n) as expressed by the formula 1, with the complex digital signals $y_1(n)$, $y_2(n)$, ......, $y_M(n)$ obtained from the base band and digital processing unit 40. Further, a vector $\hat{\varphi}$ of the correlation between the signal y (n) and $y^*_M(n)$, and a vector $\hat{\bar{\varphi}}$ of the correlation between y (n) and $y^*_1(n)$ are obtained by formula 11 by using the reception vector $\{\mathbf{y}(n)\}_{n=1}^{N}$ for sample times n=1, 2, ......, N.

$$\hat{\varphi} = [\hat{r}_{1M}, \hat{r}_{2M}, \cdots, \hat{r}_{MM}]^T = \frac{1}{N}\sum_{n=1}^{N}\mathbf{y}(n)y_M^*(n)$$
$$\hat{\bar{\varphi}} = [\hat{r}_{11}, \hat{r}_{21}, \cdots, \hat{r}_{M1}]^T = \frac{1}{N}\sum_{n=1}^{N}\mathbf{y}(n)y_1^*(n)$$

[Formula 11]

Next, the means for defining correlation matrix 52 defines the estimated (L-1)×p correlation matrices $\hat{\phi}_f$, $\hat{\bar{\Phi}}_f$, $\hat{\phi}_b$, $\hat{\bar{\Phi}}_b$ as shown in Fig. 2 and Fig. 3, by using the correlation value obtained by the formulae 11,

$$\hat{\Phi}_f \equiv \begin{bmatrix} \hat{r}_{1M} & \hat{r}_{2M} & \cdots & \hat{r}_{pM} \\ \hat{r}_{2M} & \hat{r}_{3M} & \cdots & \hat{r}_{p+1M} \\ \vdots & \vdots & \ddots & \vdots \\ \hat{r}_{L-1M} & \hat{r}_{LM} & \cdots & \hat{r}_{M-1M} \end{bmatrix}, \quad \hat{\bar{\Phi}}_f \equiv \begin{bmatrix} \hat{r}_{21} & \hat{r}_{31} & \cdots & \hat{r}_{p+1,1} \\ \hat{r}_{31} & \hat{r}_{41} & \cdots & \hat{r}_{p+2,1} \\ \vdots & \vdots & \ddots & \vdots \\ \hat{r}_{L1} & \hat{r}_{L+1,L} & \cdots & \hat{r}_{M1} \end{bmatrix}$$
$$\hat{\Phi}_b \equiv \begin{bmatrix} \hat{r}_{1M} & \hat{r}_{1,M-1} & \cdots & \hat{r}_{1L} \\ \hat{r}_{1,M-1} & \hat{r}_{1,M-2} & \cdots & \hat{r}_{1,L-1} \\ \vdots & \vdots & \ddots & \vdots \\ \hat{r}_{1,p+1} & \hat{r}_{1p} & \cdots & \hat{r}_{12} \end{bmatrix}, \quad \hat{\bar{\Phi}}_b \equiv \begin{bmatrix} \hat{r}_{M,M-1} & \hat{r}_{M,M-2} & \cdots & \hat{r}_{M,L-1} \\ \hat{r}_{M,M-2} & \hat{r}_{M,M-3} & \cdots & \hat{r}_{M,L-2} \\ \vdots & \vdots & \ddots & \vdots \\ \hat{r}_{Mp} & \hat{r}_{M,p-1} & \cdots & \hat{r}_{M1} \end{bmatrix}.$$

[Formula 12]

where L=M-p+1. It is known from the formula 2 that the correlation matrixes $\hat{\phi}_f$, $\hat{\bar{\Phi}}_f$, $\hat{\phi}_b$, $\hat{\bar{\Phi}}_b$ do not undergo the noise when the length of data N is sufficient. Also, it is known that there exist relationships of $\Phi_b = \mathbf{J}_{L-1}\bar{\Phi}_f^*\mathbf{J}_p$ and $\bar{\Phi}_b = \mathbf{J}_{L-1}\Phi_f^*\mathbf{J}_p$, where $J_m$ is mxm reflection matrix. Further, the estimation value $\hat{\Phi} \equiv [\hat{\Phi}_f, \hat{\bar{\Phi}}_f, \hat{\Phi}_b, \hat{\bar{\Phi}}_b]$ of the (L-1)×4p correlation matrix is defined.

Next, the means for calculating a linear operator 53 divides the estimation value of the correlation matrix $\hat{\Phi}$ into two parts as below,

$$\hat{\Phi} \equiv \begin{bmatrix} \hat{\Phi}_1 \\ \hat{\Phi}_2 \end{bmatrix} \begin{matrix} \}p \\ \}L-p-1 \end{matrix} \text{ [Formula 13]}$$

where the px4p correlation matrix $\Phi_1$ and the (L-p-1)x4p correlation matrix $\Phi_2$ are respectively $\Phi_1 \equiv [\Phi_{f1}, \overline{\Phi}_{f1}, \Phi_{b1}, \overline{\Phi}_{b1}]$ and $\Phi_2 \equiv [\Phi_{f2}, \overline{\Phi}_{f2}, \Phi_{b2}, \overline{\Phi}_{b2}]$ . Also, a linear operator P is obtained by a formula 14 below.

$$\hat{\mathbf{P}} = (\hat{\Phi}_1 \hat{\Phi}_1^H)^{-1} \hat{\Phi}_1 \hat{\Phi}_2^H \text{ [Formula 14]}$$

Next, the means for calculating orthogonal projection operator 54 obtains an orthogonal projection operator $\Pi_{\hat{\mathbf{Q}}}$ by a formula 15 below.

$$\Pi_{\hat{\mathbf{Q}}} = \hat{\mathbf{Q}}(\mathbf{I}_{L-p-1} - \hat{\mathbf{P}}^H (\hat{\mathbf{P}}\hat{\mathbf{P}}^H + \mathbf{I}_p)\hat{\mathbf{P}})^{-1} \hat{\mathbf{Q}}^H \text{ [Formula 15]}$$

Finally, the means for determining peak positions of the spectrum or zero-point phase of a polynomial 55 calculates the arrival direction of each of the multipath waves from the highest peak position among the p peaks of the spectrum P(θ) in a formula 16 below, or from the zero-point which is the closest to a unit circle among the p zero-points of the polynomial p(z) as shown in a formula 17 below, so that the estimation result $\{\hat{\theta}_k\}$ is output,

$$P(\theta) \equiv \frac{1}{\overline{\mathbf{a}}^H(\theta)\Pi_{\hat{\mathbf{Q}}}\overline{\mathbf{a}}(\theta)} \text{ [Formula 16]}$$

$$p(z) \equiv z^{L-2}\mathbf{p}^H(z)\Pi_{\hat{\mathbf{Q}}}\mathbf{p}(z) \text{ [Formula 17]}$$

where $\overline{\mathbf{a}}(\theta) \equiv [1, e^{j\omega_0\tau(\theta)}, \cdots, e^{j\omega_0(L-2)\tau(\theta)}]^T$ , $\mathbf{p}(z) \equiv [1, z, \cdots, z^{L-2}]^T$ and $z \equiv e^{j\omega_0\tau(\theta)}$.

As above, the arrival direction estimating unit 50 can estimate the arrival direction of each of the multipath waves. Hereinafter, a more detailed explanation will be given for a specific example of a calculated simulation. Here, it is assumed that the number of antenna elements M is ten. Also, two multipath waves having the same power (p=2) are incident on the array antenna respectively with angles $\theta_1$=5° and $\theta_2$=12°.

Initially, estimation performance of an arrival direction of each of the multipath waves based on an embodiment of the present invention with respect to the signal-to-noiseratio (SNR) is discussed. Now, assuming that the length of the received data N is 128, the SNR is varied within a range between -10dB and 25dB. Calculation is conducted one thousand times for each value of SNR.

Fig. 9 shows the RMSE (root mean-squared-error) of estimation values $\hat{\theta}_1$ and $\hat{\theta}_2$ of the arrival directions.

For comparison, results using a theoretical error of the estimation of an arrival direction of each of the multipath waves based on the present invention, CRB (Cramér-Rao lower bound) indicating an ideal minimum error of the arrival direction estimation and the conventional spatial smoothing based MUSIC (m=7) are plotted.

As is obvious from Fig. 9, in the technique for estimating an arrival direction of a signal based on the present invention, the influence of observation noise is removed by suitably selecting the correlation $\hat{r}_{ik}$ of array data which constitutes the correlation matrix $\Phi_f$, $\overline{\Phi}_f$ , $\Phi_b$, $\overline{\Phi}_b$ so that the estimation performance of the present invention is much better than that of the spatial smoothing based MUSIC utilizing eigenvalue decomposition. Also, there is only a very slight difference between the theoretical error in the technique of the present invention and CRB. Further, the computation amount of the technique of the present invention is greatly reduced becoming 1/7.147 of the computation amount in the spatial smoothing based MUSIC.

Next, the estimation performance of the arrival direction of each of the multipath waves based on the present invention with respect to the length of the received data is discussed. Now, assuming that the SNR is 10dB, the length of the received data N (the number of snapshots) is varied within a range between 10 and 1000.

Fig. 10 shows the RMSE of each of the estimation values $\theta_1$ and $\theta_2$ obtained by calculation after one thousand times.

As shown in Fig. 10, the estimation error expressed as RMSE according the technique for the present invention is very close to the ideal minimum error shown as CRB when the length of data is great. However, even when the amount of the received data is not great, the technique according to the present invention provides an estimation of the arrival directions more accurately than the conventional spatial smoothing based MUSIC.

In the above example, an aspect of the method for estimating the arrival direction of each of the multipath waves in which the estimated correlated matrix $\hat{\Phi}$ is constituted by $\hat{\Phi} \equiv [\hat{\Phi}_f, \hat{\bar{\Phi}}_f, \hat{\Phi}_b, \hat{\bar{\Phi}}_b]$ has been explained. However, when the estimated correlation matrix $\hat{\Phi}$ is defined by a combination of the correlation matrices $\hat{\Phi}_f$, $\hat{\bar{\Phi}}_f$, $\hat{\Phi}_b$, $\hat{\bar{\Phi}}_b$, the method for estimating an arrival direction of each of the multipath waves, the partially correlated signals or the uncorrelated signals in the white noise environment without a correlation can be easily realized.

Further, when it is assumed that the length of the spatial correlation of noise is $\bar{q}$ in a spatial correlation noise environment (i.e. $E\{w_i(n)w^*_{i+k}(n)\}=0$ in the case of $|k|>\bar{q}$), the $(L-\bar{q}-1)\times p$ correlation matrixes $\hat{\Phi}_f$, $\hat{\bar{\Phi}}_f$, $\hat{\Phi}_b$, $\hat{\bar{\Phi}}_b$ can be defined from the estimation value $\hat{r}_{ik}$ of the correlation of array data as shown in and expressed by Fig. 4, Fig. 5 and a formula 8, instead of the (L-1)×p correlation matrixes $\hat{\Phi}_f$, $\hat{\bar{\Phi}}_f$, $\hat{\Phi}_b$, $\hat{\bar{\Phi}}_b$ in the formula 12. Here, it is assumed that $M>2p+\bar{q}$.

$$\hat{\Phi}_f \equiv \begin{bmatrix} \hat{r}_{1M} & \hat{r}_{2M} & \cdots & \hat{r}_{pM} \\ \hat{r}_{2M} & \hat{r}_{3M} & \cdots & \hat{r}_{p+1M} \\ \vdots & \vdots & \ddots & \vdots \\ \hat{r}_{L-\bar{q}-1M} & \hat{r}_{L-\bar{q}M} & \cdots & \hat{r}_{M-\bar{q}-1M} \end{bmatrix}, \quad \hat{\bar{\Phi}}_f \equiv \begin{bmatrix} \hat{r}_{\bar{q}+2,1} & \hat{r}_{\bar{q}+3,1} & \cdots & \hat{r}_{\bar{q}+p+1,1} \\ \hat{r}_{\bar{q}+3,1} & \hat{r}_{\bar{q}+4,1} & \cdots & \hat{r}_{\bar{q}+p+2,1} \\ \vdots & \vdots & \ddots & \vdots \\ \hat{r}_{L1} & \hat{r}_{L+1,L} & \cdots & \hat{r}_{M1} \end{bmatrix}$$

$$\hat{\Phi}_b \equiv \begin{bmatrix} \hat{r}_{1M} & \hat{r}_{1,M-1} & \cdots & \hat{r}_{1L} \\ \hat{r}_{1,M-1} & \hat{r}_{1,M-2} & \cdots & \hat{r}_{1,L-1} \\ \vdots & \vdots & \ddots & \vdots \\ \hat{r}_{1,\bar{q}+p+1} & \hat{r}_{1,\bar{q}+p} & \cdots & \hat{r}_{1,\bar{q}+2} \end{bmatrix}, \quad \hat{\bar{\Phi}}_b \equiv \begin{bmatrix} \hat{r}_{M,M-\bar{q}-1} & \hat{r}_{M,M-\bar{q}-2} & \cdots & \hat{r}_{M,L-\bar{q}-1} \\ \hat{r}_{M,M-\bar{q}-2} & \hat{r}_{M,M-\bar{q}-3} & \cdots & \hat{r}_{M,L-\bar{q}-2} \\ \vdots & \vdots & \ddots & \vdots \\ \hat{r}_{Mp} & \hat{r}_{M,p-1} & \cdots & \hat{r}_{M1} \end{bmatrix}$$

[formula 18]

Further, the corresponding estimated correlation matrix $\hat{\Phi}$ can be divided into two parts as expressed by formula 19.

$$\hat{\Phi} \equiv \begin{bmatrix} \hat{\Phi}_1 \\ \hat{\Phi}_2 \end{bmatrix} \begin{matrix} \}p \\ \}L-\bar{q}-p-1 \end{matrix} \quad \text{[formula 19]}$$

A method for estimating the arrival direction of each of the multipath waves, partially correlated signals or the uncorrelated signals in a spatial correlation noise environment can be realized by using the concepts of formula 14 to formula 17. Here, the reason that the correlation matrix is defined by removing the element closest to the diagonal element of the covariance matrix R is that the noise components ride on a part which is close to the diagonal element of the covariance matrix R. Therefore, by defining the correlation matrix by removing the element which is closest to the diagonal element of the covariance matrix R, a technique in which the signal arrival directions are accurately estimated even when the noise component is included can be provided.

Further, by utilizing the signal arrival direction estimating device which employs the technique for estimating an arrival direction of each of the signals as explained above, a reception beam shaper for a base station which shapes a beam whose intensity peak is directed in a desired arrival direction can be realized.

Fig. 11 explains the reception beam shaper for a base station which shapes a beam whose intensity peak is directed in a desired arrival direction realized by utilizing the arrival direction estimating device which employs the technique for estimating an arrival direction of each of the signals in an embodiment of the present invention.

Here, in a configuration of the reception beam shaper in the base station 20, a signal is received by the array antenna 20, the complex digital received data is obtained from the base band and digital processing unit 30, and a desired beam can be shaped by a beam shaper 60 which uses an estimation value of an arrival direction obtained from the arrival direction estimating unit 40. The data obtained by extracting a desired signal by suppressing interference and noise is sent from the beam shaper 60 to a channel receiving unit 70, and in the channel receiving unit 70, a receiving process according to the common and conventional method is executed so that the received data is obtained. Also, as the beam shaper 70, various configurations are possible by utilizing the information regarding the arrival direction obtained by the technique according to the present invention. For example, by utilizing a beam shaping technique discussed in "An algorithm for linearly constrained adaptive array processing," by O.L. Frost, Proc. IEEE, vol. 60, no. 8, pp. 926-935 (1975) and "Array beam forming based on cyclic signal detection", by J. Xin, HTsuji, YHase, andA. Sano, Proc. IEEE 48th Vehicular Technology Conference, pp. 890-894, Ottawa, Canada (1998) and the like, a beam can be shaped to a desired arrival direction of a signal.

The technique can be utilized for controlling the peak of a reception beam in which the peak of the receiving sensitivity at a base station is directed to the estimated arrival direction, and also can be utilized for controlling the peak of a transmitted beam so that the intensity peak of the transmitted signal is directed to the estimated arrival direction when the base station transmits a signal.

**Applicability to industries**

As explained above, the present invention realizes estimation of an arrival direction of each of the signals incident at angles which are spatially close to one another, with a reduced computation amount, without utilizing the eigenvalue decomposition. As clearly demonstrated in the specific example of the calculated simulation, the technique according to the present invention realizes an accurate estimation of the arrival direction of a signal incident on an array antenna at a base station even when the length of received data is not sufficient or when the signal-to-noise ratio (SNR) is low. Also, the technique according to the present invention realizes a much better estimation performance with a reduced computation amount than the conventional spatial smoothing based MUSIC. Accordingly, the accuracy of the estimation of the arrival direction of each of the multipath waves can be enhanced. Further, by utilizing information regarding the signal arrival direction obtained by the method for estimating the arrival direction of a signal according to the present invention, a variable directivity receiving/transmitting device for a base station which can shape a beam having a directivity in a desired direction can be realized.

**Claims**

**1.** A method for estimating signal arrival direction, comprising:

obtaining correlations among some of elements based on received signals from a plurality of array antenna elements which are linearly arrayed in different spatial positions with uniform element spacings, and defining one correlation matrix from the correlations;
estimating a noise subspace from the correlation matrix by a linear operation; and
calculatingapeakpositionofthe spatial spectrum obtained from the noise subspace or a zero-point of a polynomial which is equivalent to the peak position, and calculating a signal arrival direction.

**2.** The method for estimating signal arrival direction according to claim 1, wherein:

the correlation matrix is obtained from correlations between $M^{th}$ element data and $1^{st}$, $2^{nd}$,......, $M\text{-}1^{th}$ elements data when it is assumed that M is the number of the antenna elements.

**3.** The method for estimating signal arrival direction according to claim 1, wherein:

the correlation matrix is obtained from correlations between first element data and $2^{nd}$, $3^{rd}$,......, $M^{th}$ elements data when it is assumed that M is the number of the antenna elements.

**4.** The method for estimating signal arrival direction according to claim 1, wherein:

the correlation matrix is obtained by a formula

$$\hat{\Phi}_f \equiv \begin{bmatrix} \hat{r}_{1M} & \hat{r}_{2M} & \cdots & \hat{r}_{pM} \\ \hat{r}_{2M} & \hat{r}_{3M} & \cdots & \hat{r}_{p+1,M} \\ \vdots & \vdots & \ddots & \vdots \\ \hat{r}_{L-1,M} & \hat{r}_{LM} & \cdots & \hat{r}_{M-1,M} \end{bmatrix}$$

when it is assumed that $\hat{r}_{ij}$ is a correlation between $i^{th}$ element data and $j^{th}$ element data, M is the number of the antenna elements, and p and L are respectively arbitrary natural numbers.

**5.** The method for estimating signal arrival direction according to claim 1, wherein:

the correlation matrix is obtained by a formula

$$\hat{\bar{\Phi}}_b \equiv \begin{bmatrix} \hat{r}_{M,M-1} & \hat{r}_{M,M-2} & \cdots & \hat{r}_{M,L-1} \\ \hat{r}_{M,M-2} & \hat{r}_{M,M-3} & \cdots & \hat{r}_{ML-2} \\ \vdots & \vdots & \ddots & \vdots \\ \hat{r}_{Mp} & \hat{r}_{M,p-1} & \cdots & \hat{r}_{M1} \end{bmatrix}$$

when it is assumed that $\hat{r}_{ij}$ is a correlation between the $i^{th}$ element data and the $j^{th}$ element data, M is the number of the antenna elements, and p and L are respectively arbitrary natural numbers.

**6.** The method for estimating signal arrival direction according to claim 1, wherein:

the correlation matrix is obtained by a formula

$$\hat{\bar{\Phi}}_f \equiv \begin{bmatrix} \hat{r}_{21} & \hat{r}_{31} & \cdots & \hat{r}_{p+1,1} \\ \hat{r}_{31} & \hat{r}_{41} & \cdots & \hat{r}_{p+2,1} \\ \vdots & \vdots & \ddots & \vdots \\ \hat{r}_{L1} & \hat{r}_{L+1,1} & \cdots & \hat{r}_{M1} \end{bmatrix}$$

when it is assumed that $\hat{r}_{ij}$ is a correlation between the $i^{th}$ element data and the $j^{th}$ element data, M is the number of the antenna elements, and p and L are respectively arbitrary natural numbers.

**7.** The method for estimating signal arrival direction according to claim 1, wherein:

the correlation matrix is obtained by a formula

$$\hat{\Phi}_b \equiv \begin{bmatrix} \hat{r}_{1M} & \hat{r}_{1,M-1} & \cdots & \hat{r}_{1L} \\ \hat{r}_{1,M-1} & \hat{r}_{1,M-2} & \cdots & \hat{r}_{1,L-1} \\ \vdots & \vdots & \ddots & \vdots \\ \hat{r}_{1,p+1} & \hat{r}_{1p} & \cdots & \hat{r}_{12} \end{bmatrix}$$

when it is assumed that $\hat{r}_{ij}$ is a correlation between the i$^{th}$ element data and the j$^{th}$ element data, M is the number of the antenna elements, and p and L are respectively arbitrary natural numbers.

**8.** The method for estimating signal arrival direction according to claim 1, wherein:

the correlation matrix is defined from two arbitrary matrixes obtained by formulae

$$\hat{\Phi}_f \equiv \begin{bmatrix} \hat{r}_{1M} & \hat{r}_{2M} & \cdots & \hat{r}_{pM} \\ \hat{r}_{2M} & \hat{r}_{3M} & \cdots & \hat{r}_{p+1,M} \\ \vdots & \vdots & \ddots & \vdots \\ \hat{r}_{L-1,M} & \hat{r}_{LM} & \cdots & \hat{r}_{M-1,M} \end{bmatrix}, \quad \bar{\hat{\Phi}}_f \equiv \begin{bmatrix} \hat{r}_{21} & \hat{r}_{31} & \cdots & \hat{r}_{p+1,1} \\ \hat{r}_{31} & \hat{r}_{41} & \cdots & \hat{r}_{p+2,1} \\ \vdots & \vdots & \ddots & \vdots \\ \hat{r}_{L1} & \hat{r}_{L+1,1} & \cdots & \hat{r}_{M1} \end{bmatrix}$$

$$\hat{\Phi}_b \equiv \begin{bmatrix} \hat{r}_{1M} & \hat{r}_{1,M-1} & \cdots & \hat{r}_{1L} \\ \hat{r}_{1,M-1} & \hat{r}_{1,M-2} & \cdots & \hat{r}_{1,L-1} \\ \vdots & \vdots & \ddots & \vdots \\ \hat{r}_{1,p+1} & \hat{r}_{1p} & \cdots & \hat{r}_{12} \end{bmatrix}, \quad \bar{\hat{\Phi}}_b \equiv \begin{bmatrix} \hat{r}_{M,M-1} & \hat{r}_{M,M-2} & \cdots & \hat{r}_{M,L-1} \\ \hat{r}_{M,M-2} & \hat{r}_{M,M-3} & \cdots & \hat{r}_{ML-2} \\ \vdots & \vdots & \ddots & \vdots \\ \hat{r}_{Mp} & \hat{r}_{M,p-1} & \cdots & \hat{r}_{M1} \end{bmatrix}$$

when it is assumed that $\hat{r}_{ij}$ is a correlation between the i$^{th}$ element data and the j$^{th}$ element data, M is the number of the antenna elements, and p and L are respectively arbitrary natural numbers.

**9.** The method for estimating signal arrival direction according to claim 1, wherein:

the correlation matrix is defined from three arbitrary matrixes obtained by formulae

$$\hat{\Phi}_f \equiv \begin{bmatrix} \hat{r}_{1M} & \hat{r}_{2M} & \cdots & \hat{r}_{pM} \\ \hat{r}_{2M} & \hat{r}_{3M} & \cdots & \hat{r}_{p+1,M} \\ \vdots & \vdots & \ddots & \vdots \\ \hat{r}_{L-1,M} & \hat{r}_{LM} & \cdots & \hat{r}_{M-1,M} \end{bmatrix}, \quad \bar{\hat{\Phi}}_f \equiv \begin{bmatrix} \hat{r}_{21} & \hat{r}_{31} & \cdots & \hat{r}_{p+1,1} \\ \hat{r}_{31} & \hat{r}_{41} & \cdots & \hat{r}_{p+2,1} \\ \vdots & \vdots & \ddots & \vdots \\ \hat{r}_{L1} & \hat{r}_{L+1,1} & \cdots & \hat{r}_{M1} \end{bmatrix}$$

$$\hat{\Phi}_b \equiv \begin{bmatrix} \hat{r}_{1M} & \hat{r}_{1,M-1} & \cdots & \hat{r}_{1L} \\ \hat{r}_{1,M-1} & \hat{r}_{1,M-2} & \cdots & \hat{r}_{1,L-1} \\ \vdots & \vdots & \ddots & \vdots \\ \hat{r}_{1,p+1} & \hat{r}_{1p} & \cdots & \hat{r}_{12} \end{bmatrix}, \quad \hat{\bar{\Phi}}_b \equiv \begin{bmatrix} \hat{r}_{M,M-1} & \hat{r}_{M,M-2} & \cdots & \hat{r}_{M,L-1} \\ \hat{r}_{M,M-2} & \hat{r}_{M,M-3} & \cdots & \hat{r}_{ML-2} \\ \vdots & \vdots & \ddots & \vdots \\ \hat{r}_{Mp} & \hat{r}_{M,p-1} & \cdots & \hat{r}_{M1} \end{bmatrix}$$

when it is assumed that $\hat{r}_{ij}$ is a correlation between the $i^{th}$ element data and the $j^{th}$ element data, M is the number of the antenna elements, and p and L are respectively arbitrary natural numbers.

**10.** The method for estimating signal arrival direction according to claim 1, wherein:

the correlation matrix is defined by a combination of four matrixes obtained by formulae

$$\hat{\Phi}_f \equiv \begin{bmatrix} \hat{r}_{1M} & \hat{r}_{2M} & \cdots & \hat{r}_{pM} \\ \hat{r}_{2M} & \hat{r}_{3M} & \cdots & \hat{r}_{p+1,M} \\ \vdots & \vdots & \ddots & \vdots \\ \hat{r}_{L-1,M} & \hat{r}_{LM} & \cdots & \hat{r}_{M-1,M} \end{bmatrix}, \quad \hat{\bar{\Phi}}_f \equiv \begin{bmatrix} \hat{r}_{21} & \hat{r}_{31} & \cdots & \hat{r}_{p+1,1} \\ \hat{r}_{31} & \hat{r}_{41} & \cdots & \hat{r}_{p+2,1} \\ \vdots & \vdots & \ddots & \vdots \\ \hat{r}_{L1} & \hat{r}_{L+1,1} & \cdots & \hat{r}_{M1} \end{bmatrix}$$

$$\hat{\Phi}_b \equiv \begin{bmatrix} \hat{r}_{1M} & \hat{r}_{1,M-1} & \cdots & \hat{r}_{1L} \\ \hat{r}_{1,M-1} & \hat{r}_{1,M-2} & \cdots & \hat{r}_{1,L-1} \\ \vdots & \vdots & \ddots & \vdots \\ \hat{r}_{1,p+1} & \hat{r}_{1p} & \cdots & \hat{r}_{12} \end{bmatrix}, \quad \hat{\bar{\Phi}}_b \equiv \begin{bmatrix} \hat{r}_{M,M-1} & \hat{r}_{M,M-2} & \cdots & \hat{r}_{M,L-1} \\ \hat{r}_{M,M-2} & \hat{r}_{M,M-3} & \cdots & \hat{r}_{ML-2} \\ \vdots & \vdots & \ddots & \vdots \\ \hat{r}_{Mp} & \hat{r}_{M,p-1} & \cdots & \hat{r}_{M1} \end{bmatrix}$$

when it is assumed that $\hat{r}_{ij}$ is a correlation between the $i^{th}$ element data and the $j^{th}$ element data, M is the number of the antenna elements, and p and L are respectively arbitrary natural numbers.

**11.** The method for estimating signal arrival direction according to claim 1, wherein:

the correlation matrix is obtained from correlations between $M^{th}$ element data and $1^{st}$, $2^{nd}$, ......, $M-1-\bar{q}^{\,th}$ elements data when it is assumed that $\bar{q}$ is an arbitrary natural number and M is the number of the antenna elements.

**12.** The method for estimating signal arrival direction according to claim 1, wherein:

the correlation matrix is obtained from correlations between first element data and $\bar{q}+2^{nd}$, $\bar{q}+3^{rd}$, ......, $M^{th}$ elements data when it is assumed that $\bar{q}$ is an arbitrary natural number and M is the number of the antenna elements.

**13.** The method for estimating signal arrival direction according to claim 1, wherein:

the correlation matrix is defined by using one arbitrary, two arbitrary, three arbitrary or all four matrixes obtained by formulae

$$\hat{\Phi}_f \equiv \begin{bmatrix} \hat{r}_{1M} & \hat{r}_{2M} & \cdots & \hat{r}_{pM} \\ \hat{r}_{2M} & \hat{r}_{3M} & \cdots & \hat{r}_{p+1,M} \\ \vdots & \vdots & \ddots & \vdots \\ \hat{r}_{L-\bar{q}-1,M} & \hat{r}_{L-\bar{q}M} & \cdots & \hat{r}_{M-\bar{q}-1,M} \end{bmatrix}, \quad \hat{\bar{\Phi}}_f \equiv \begin{bmatrix} \hat{r}_{\bar{q}+2,1} & \hat{r}_{\bar{q}+3,1} & \cdots & \hat{r}_{\bar{q}+p+1,1} \\ \hat{r}_{\bar{q}+3,1} & \hat{r}_{\bar{q}+4,1} & \cdots & \hat{r}_{\bar{q}+p+2,1} \\ \vdots & \vdots & \ddots & \vdots \\ \hat{r}_{L1} & \hat{r}_{L+1,1} & \cdots & \hat{r}_{M1} \end{bmatrix}$$

$$\hat{\Phi}_b \equiv \begin{bmatrix} \hat{r}_{1M} & \hat{r}_{1,M-1} & \cdots & \hat{r}_{1L} \\ \hat{r}_{1,M-1} & \hat{r}_{1,M-2} & \cdots & \hat{r}_{1,L-1} \\ \vdots & \vdots & \ddots & \vdots \\ \hat{r}_{1,\bar{q}+p+1} & \hat{r}_{1,\bar{q}+p} & \cdots & \hat{r}_{1,\bar{q}+2} \end{bmatrix}, \quad \hat{\bar{\Phi}}_b \equiv \begin{bmatrix} \hat{r}_{M,M-\bar{q}-1} & \hat{r}_{M,M-\bar{q}-2} & \cdots & \hat{r}_{M,L-\bar{q}-1} \\ \hat{r}_{M,M-\bar{q}-2} & \hat{r}_{M,M-\bar{q}-3} & \cdots & \hat{r}_{M,L-\bar{q}-2} \\ \vdots & \vdots & \ddots & \vdots \\ \hat{r}_{Mp} & \hat{r}_{M,p-1} & \cdots & \hat{r}_{M1} \end{bmatrix}$$

when it is assumed that $\hat{r}_{ij}$ is a correlation between the i$^{th}$ element data and the j$^{th}$ element data, M is the number of the antenna elements, and $\bar{q}$, p and L are respectively arbitrary natural numbers.

**14.** The method for estimating signal arrival direction according to one of claim 1 to claim 13, wherein:

the method for estimating signal arrival direction is realized in a base station.

**15.** The method for estimating signal arrival direction according to one of claim 1 to claim 13, wherein:

the method for estimating signal arrival direction is realized in a base station, and the base station directs a peak of a received beam which is a peak of sensitivity when an antenna receives the received signal to an estimated arrival direction.

**16.** The method for estimating signal arrival direction according to one of claim 1 to claim 13, wherein:

the method for estimating signal arrival direction is realized in abase station, and the base station directs, to an estimated arrival direction, a peak of a transmitted beam which is a transmission peak when an antenna transmits a signal.

**17.** A program for causing an information processing device to execute a method for estimating signal arrival direction, comprising:

obtaining correlations among some of elements data based on received signals from a plurality of array antenna elements which are linearly arrayed in different spatial positions with uniform element spacings, and defining one correlation matrix from the correlations;
estimating a noise partial space from the correlation matrix by a linear operation; and
calculating a spatial spectrum obtained from the noise partial space or a zero-point of a polynomial, and calculating a signal arrival direction.

**18.** A storage medium whose content can be read by an information processing device, storing a program which causes an information processing device to execute a method for estimating a signal arrival direction, comprising:

obtaining correlations among some elements data based on received signals from a plurality of array antenna elements which are linearly arrayed in different spatial positions with uniform element spacings, and defining one correlation matrix from the correlations;
estimating a noise partial space from the correlation matrix by a linear operation; and
calculating a spatial spectrum obtained from the noise partial space or a zero-point of a polynomial, and calculating a signal arrival direction.

**19.** A signal arrival direction estimating device, comprising:

correlation matrix defining means for obtaining correlations among some elements data based on received signals from a plurality of array antenna elements which are linearly arrayed in different spatial positions with uniform element spacings, and defining one correlation matrix from the correlations;
noise partial space estimating means for estimating a noise partial space from the correlation matrix by a linear operation; and
arrival direction estimating means for calculating a spatial spectrum obtained from the noise partial space or a zero-point of a polynomial, and calculating a signal arrival direction.

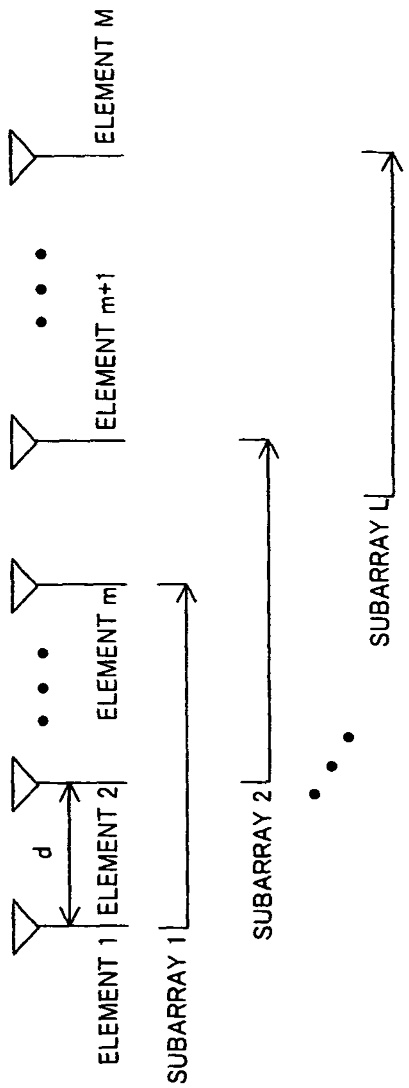
ELEMENT 1
ELEMENT 2
d
ELEMENT m
ELEMENT m+1
ELEMENT M
SUBARRAY 1
SUBARRAY 2
SUBARRAY L

F I G. 1

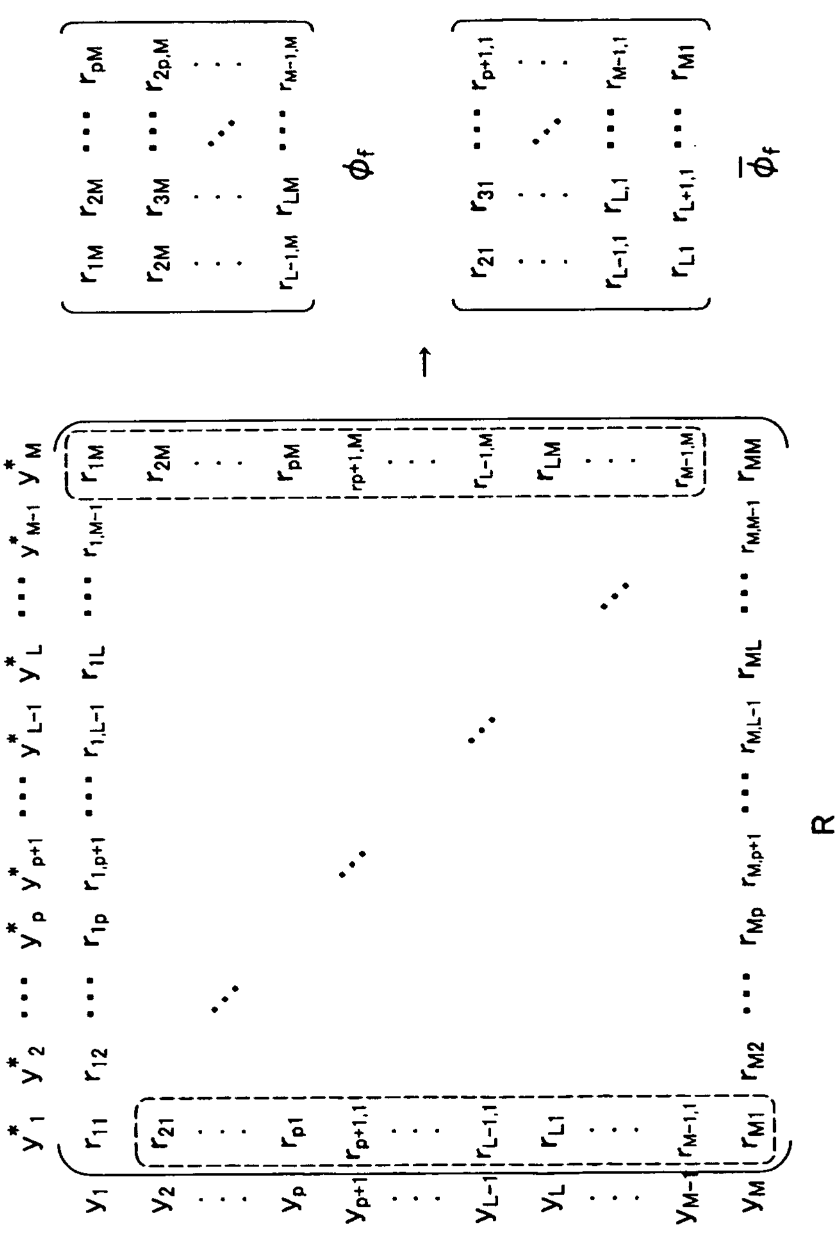


FIG. 2

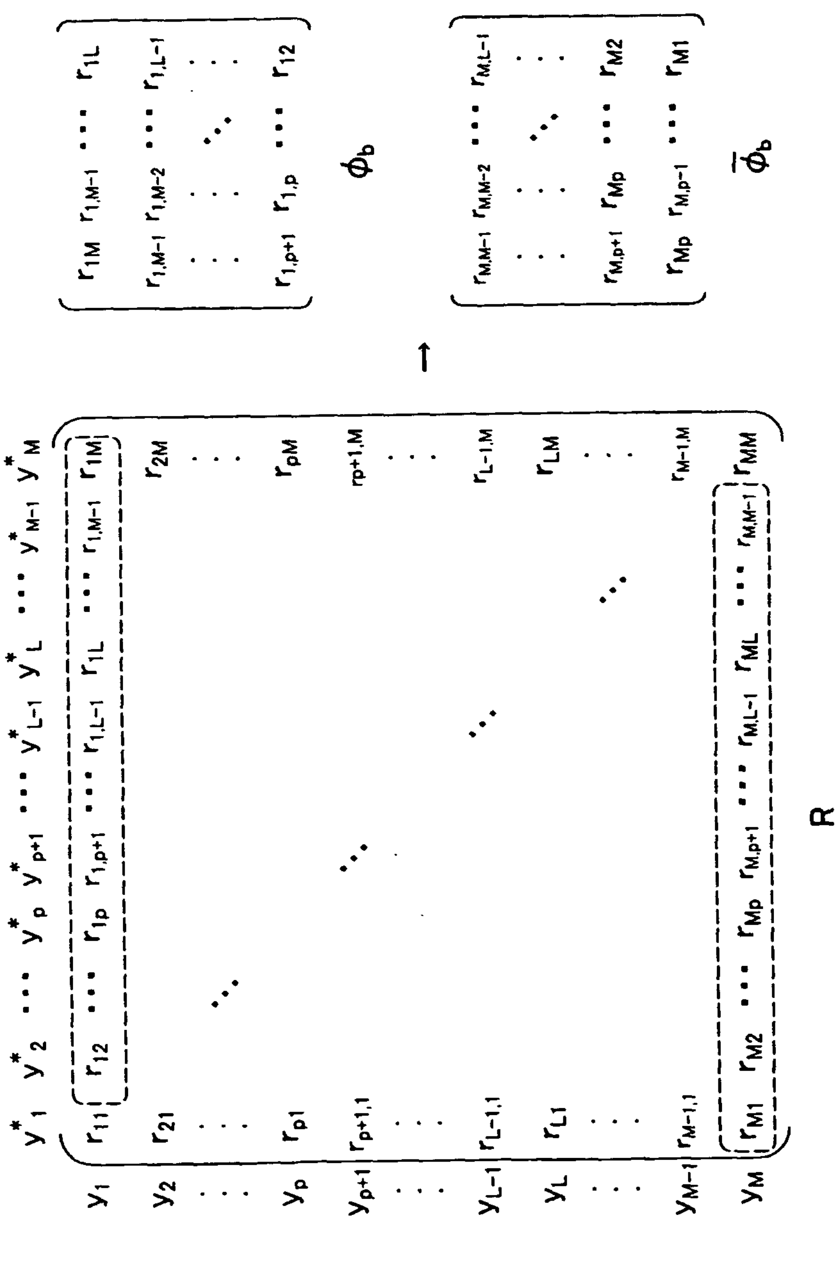

FIG. 3

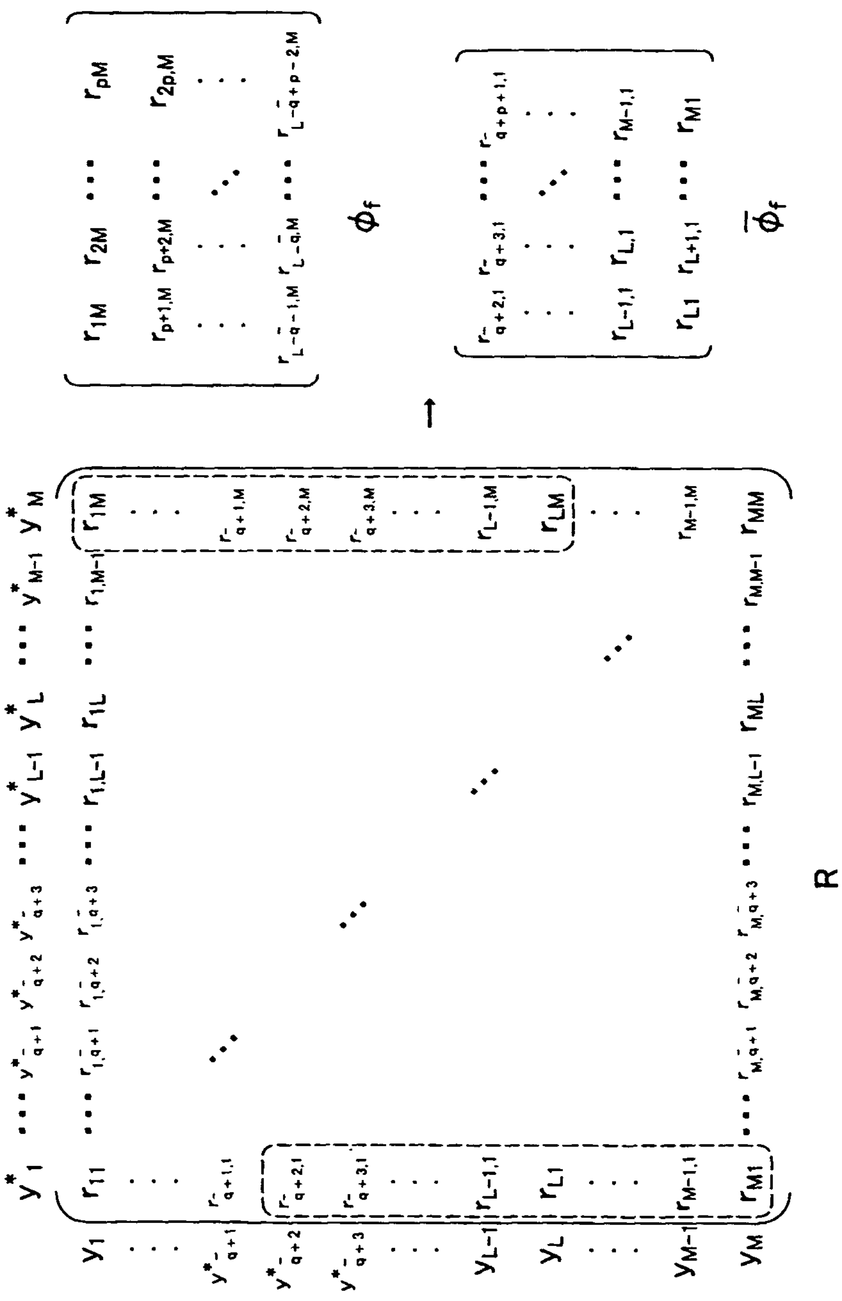

F I G. 4

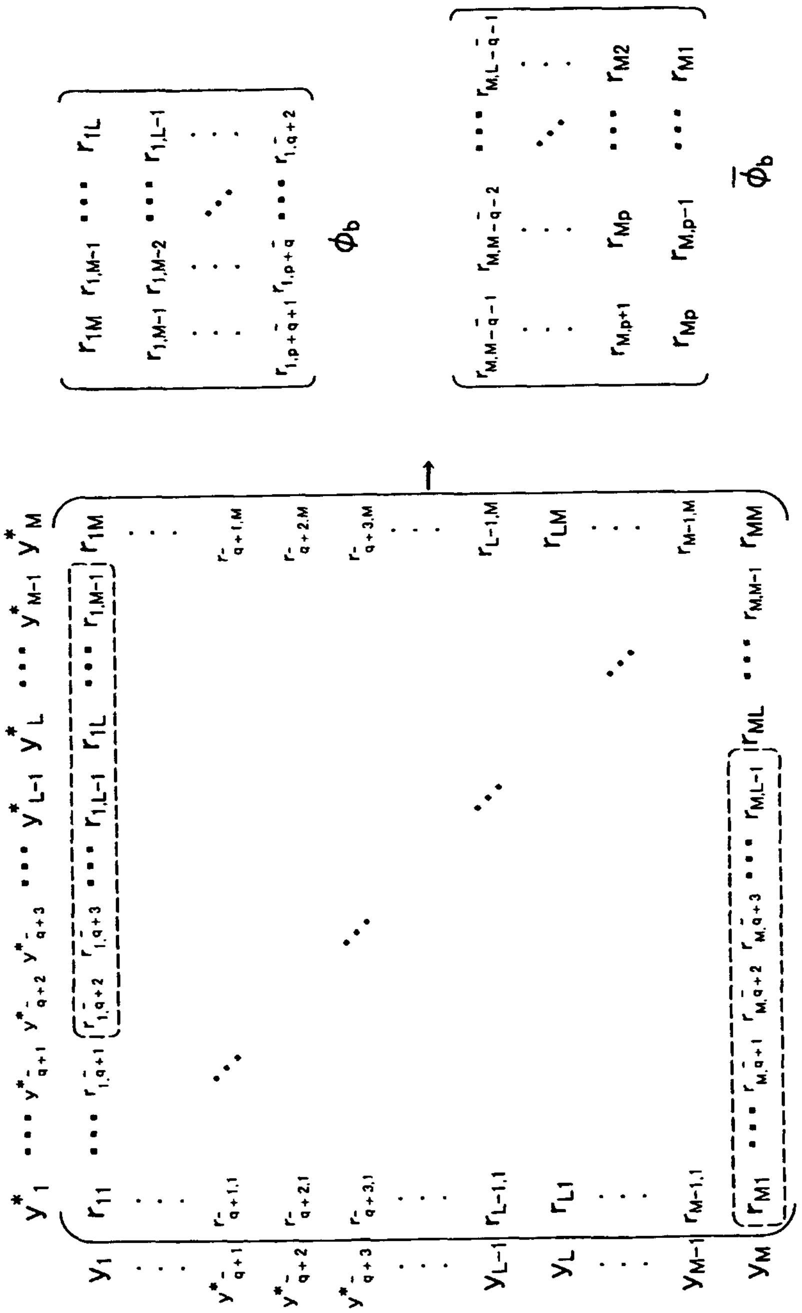


FIG. 5

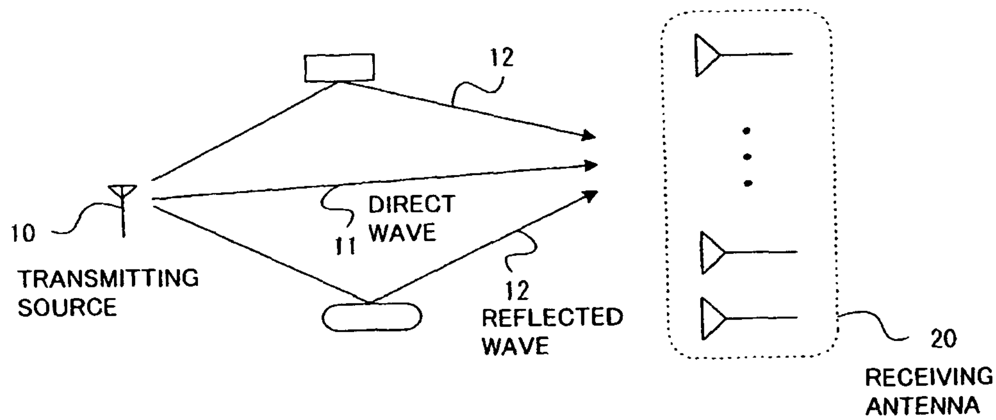
12
10
DIRECT
WAVE
11
TRANSMITTING
SOURCE
12
REFLECTED
WAVE
20
RECEIVING
ANTENNA

F I G. 6

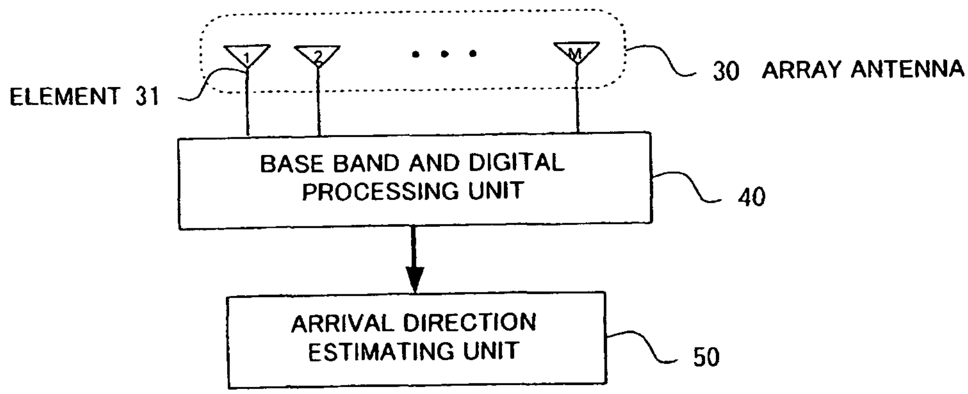
1
2
M
30 ARRAY ANTENNA
ELEMENT 31
BASE BAND AND DIGITAL
PROCESSING UNIT
40
ARRIVAL DIRECTION
ESTIMATING UNIT
50

F I G. 7

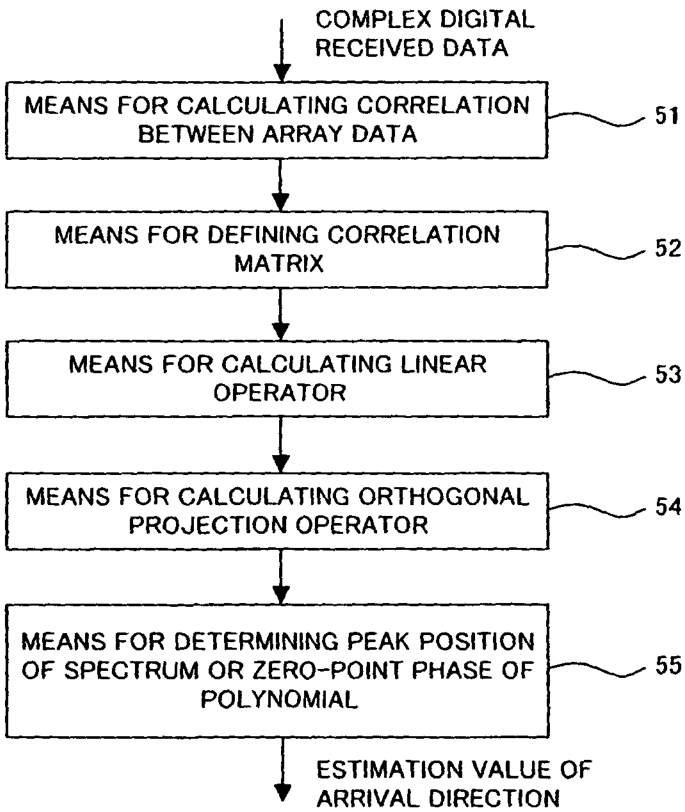
COMPLEX DIGITAL
RECEIVED DATA
MEANS FOR CALCULATING CORRELATION BETWEEN ARRAY DATA
51
MEANS FOR DEFINING CORRELATION MATRIX
52
MEANS FOR CALCULATING LINEAR OPERATOR
53
MEANS FOR CALCULATING ORTHOGONAL PROJECTION OPERATOR
54
MEANS FOR DETERMINING PEAK POSITION OF SPECTRUM OR ZERO-POINT PHASE OF POLYNOMIAL
55
ESTIMATION VALUE OF
ARRIVAL DIRECTION

F I G. 8

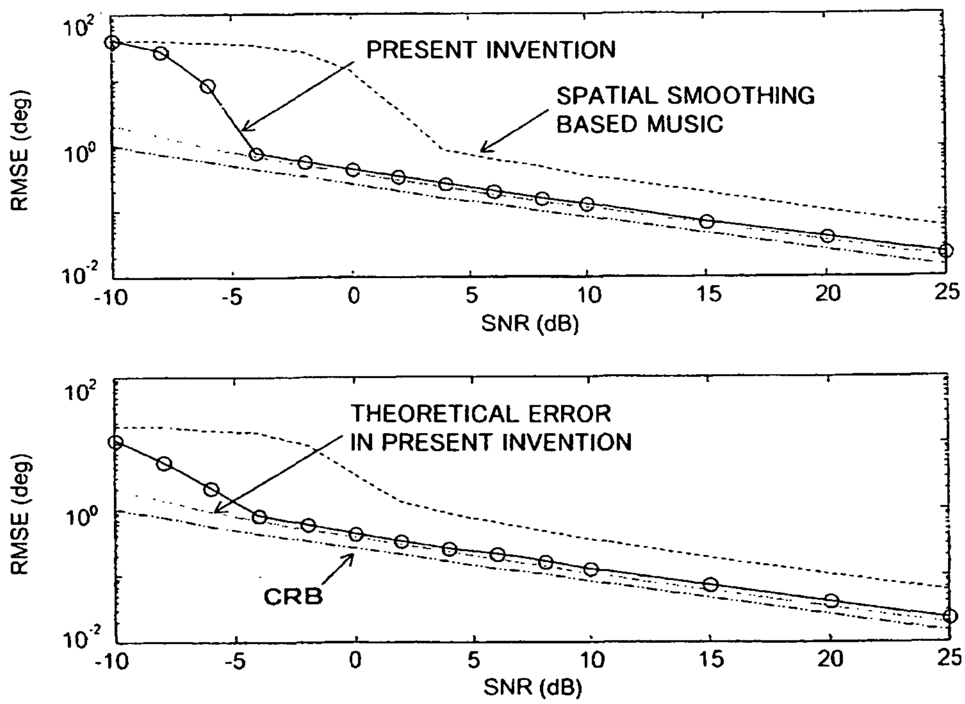
$10^2$
$10^0$
$10^{-2}$
RMSE (deg)
-10
-5
0
5
10
15
20
25
SNR (dB)
PRESENT INVENTION
SPATIAL SMOOTHING
BASED MUSIC
$10^2$
$10^0$
$10^{-2}$
RMSE (deg)
-10
-5
0
5
10
15
20
25
SNR (dB)
THEORETICAL ERROR
IN PRESENT INVENTION
CRB

F I G. 9

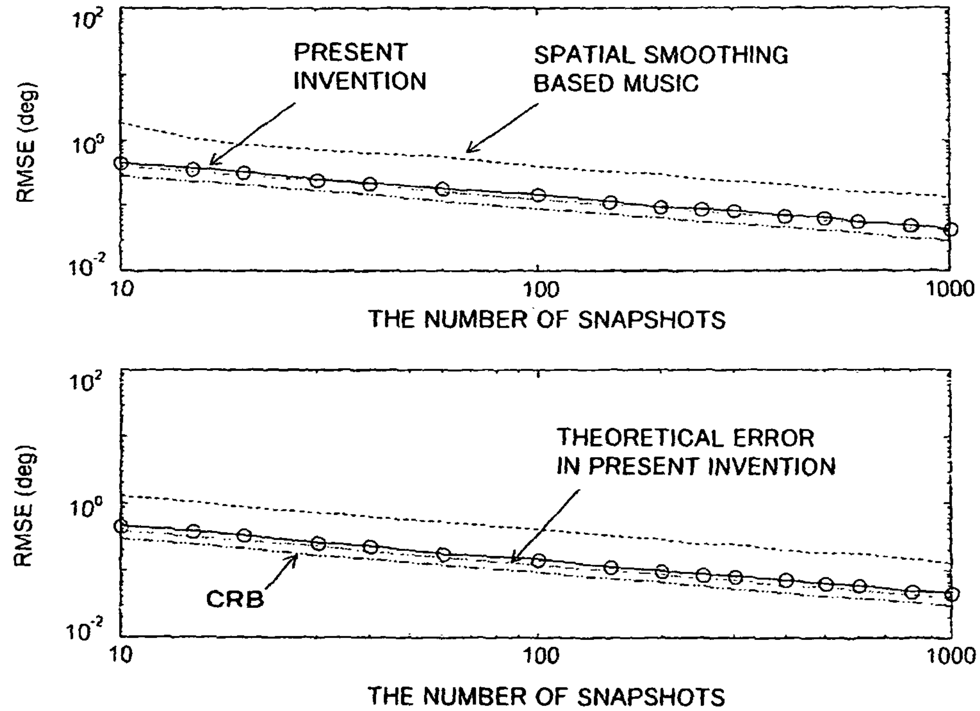
10²
10⁰
10⁻²
RMSE (deg)
PRESENT
INVENTION
SPATIAL SMOOTHING
BASED MUSIC
10
100
1000
THE NUMBER OF SNAPSHOTS
10²
10⁰
10⁻²
RMSE (deg)
THEORETICAL ERROR
IN PRESENT INVENTION
CRB
10
100
1000
THE NUMBER OF SNAPSHOTS

F I G. 1 0

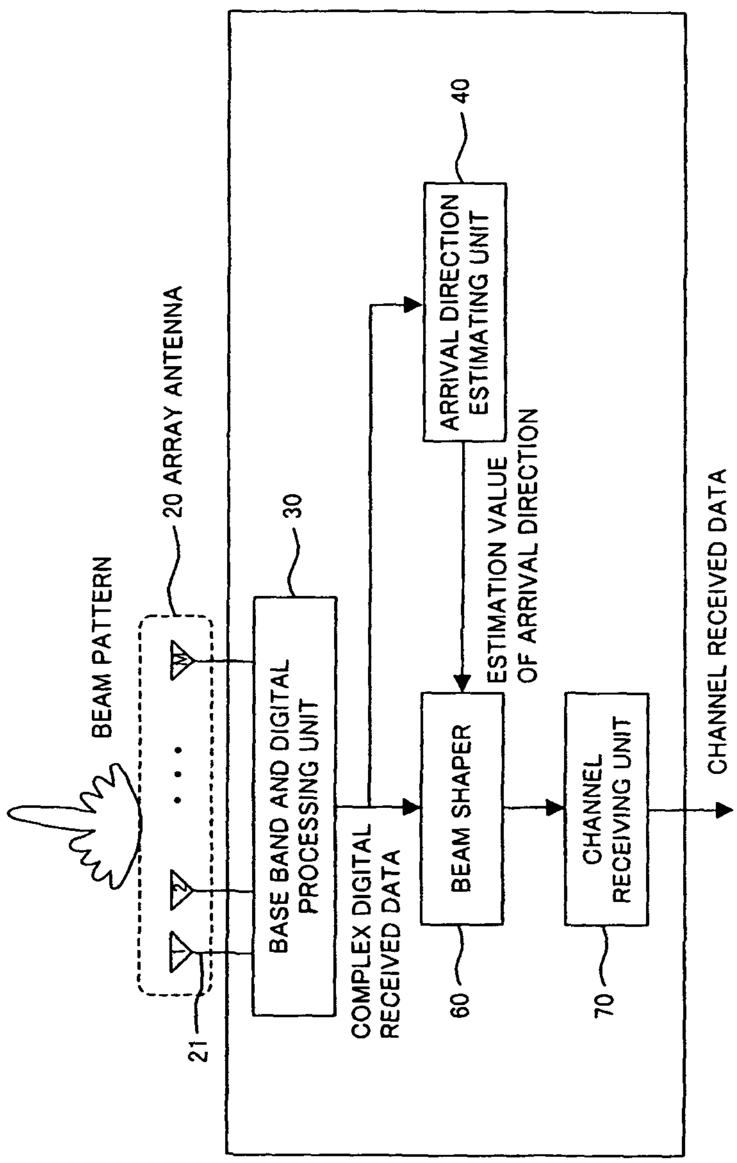
BEAM PATTERN
20 ARRAY ANTENNA
21
30
BASE BAND AND DIGITAL PROCESSING UNIT
COMPLEX DIGITAL RECEIVED DATA
40
ARRIVAL DIRECTION ESTIMATING UNIT
ESTIMATION VALUE OF ARRIVAL DIRECTION
60
BEAM SHAPER
70
CHANNEL RECEIVING UNIT
CHANNEL RECEIVED DATA

FIG. 11

**INTERNATIONAL SEARCH REPORT**

International application No.
PCT/JP03/06411

A. CLASSIFICATION OF SUBJECT MATTER
Int.Cl[7] G01S3/46, G01S3/74

According to International Patent Classification (IPC) or to both national classification and IPC

B. FIELDS SEARCHED

Minimum documentation searched (classification system followed by classification symbols)
Int.Cl[7] G01S3/46, G01S3/74

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-243826 A (Matsushita Electric Industrial Co., Ltd.), 28 August, 2002 (28.08.02), Full text; all drawings (Family: none) | 1-19 |
| A | JP 2000-111630 A (Alps Electric Co., Ltd.), 21 April, 2000 (21.04.00), Full text; all drawings (Family: none) | 1-19 |
| A | JP 11-231033 A (Kabushiki Kaisha YRP Ido Tsushin Kiban Gijutsu Kenkyusho), 27 August, 1999 (27.08.99), Full text; all drawings (Family: none) | 1-19 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 June, 2003 (12.06.03) | 24 June, 2003 (24.06.03) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/06411

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-142497 A (Mitsubishi Electric Corp.), 28 May, 1999 (28.05.99), Full text; all drawings (Family: none) | 1-19 |
| A | JP 9-219616 A (ATR Optical and Radio Communications), 19 August, 1997 (19.08.97), Full text; all drawings (Family: none) | 1-19 |
| A | Kozo OSHIMA et al., "MUSIC Ho ni okeru Sokan Gyoretsu no Keisanho ni Kansuru Ichikento", 2001.01, The Transactions of the Institute of Electronics, Information and Communication Engineers B, Vol.J84-B, No.1, pages 146 to 149, 2000, January | 1-19 |

Form PCT/ISA/210 (continuation of second sheet) (July 1998)